# EUROPÄISCHE PATENTSCHRIFT

(11) **EP 0 728 867 B1**
(45) Veröffentlichungstag und Bekanntmachung des Hinweises auf die Patenterteilung: **17.10.2001**
(21) Anmeldenummer: 96100514.7
(22) Anmeldetag: 16.01.1996
(51) Int. Cl.: D21G 1/02

(54) **Kalander für Papierbahnen**
Calender for paper webs
Calandre pour bandes de papier

(30) Priorität: 23.02.1995 DE 19506301
(43) Veröffentlichungstag der Anmeldung: 28.08.1996
(73) Patentinhaber: Voith Paper Patent GmbH, 89522 Heidenheim (DE)
(72) Erfinder: Kayser, Franz, D-47608 Geldern (DE); van Haag, Rolf, Dr., D-47647 Kerken (DE)
(74) Vertreter: Knoblauch, Ulrich, Dr.-Ing.

(56) Entgegenhaltungen:
- DE-A- 19 511 153
- DE-A- 19 547 164
- US-A- 5 023 985

## Beschreibung

Die Erfindung bezieht sich auf einen Kalander für Papierbahnen, mit mindestens zwei, einen Walzenspalt zwischen sich bildenden Walzen, nämlich einer ersten Walze und einer weichen zweiten Walze, die einen Bezug aus elastischem Kunststoff trägt, der eine innere Schicht aus einem ersten Kunststoff und eine äußere Schicht aus einem zweiten Kunststoff aufweist, wobei die äußere Schicht eine geringere Elastizität und eine größere Härte als der erste Kunststoff besitzt.

Ein solcher Kalander ist aus US 5 023 985 A bekannt. Die dort näher beschriebene weiche Walze ist für zahlreiche Anwendungszwecke vorgesehen. Die Oberflächen-Rauhheit liegt im Bereich von Rₐ = 0,1 bis 20 µm, wobei Werte von 5 µm und 1 µm hervorgehoben sind.

Unter der Bezeichnung "Soft-Kalander" sind Kalander auf dem Markt, bei denen die mit der weichen Walze einen Spalt bildende Walze eine harte Walze aus Metall ist. Die harte Walze sorgt wegen ihrer glatten Oberfläche für Glätte und Glanz der Papierbahn. Die weiche Walze führt wegen ihres elastischen Bezuges zu einer gleichmäßigen Verdichtung des Papiers. Um beiden Seiten der Papierbahn Glanz und Glätte zu verleihen, muß die Papierbahn mindestens zwei Walzenspalte durchlaufen, wobei die harten Walzen der beiden Spalte auf einander gegenüberliegenden Seiten der Papierbahn angeordnet sind. Da der Kunststoffbezug der weichen Walze wesentlich weniger empfindlich ist als ein Bezug aus Papier und daher nur in Ausnahmefällen außer Betrieb genommen und durch Abdrehen überarbeitet werden muß, kann man derartige Kalander bei einer Papiermaschine auch als In-Line-Kalander verwenden.

Es ist ferner bekannt (DE 41 26 232 A1), die mit einem Kunststoffbezug versehene Walze eines Kalanders außen mit einer dünnen Schicht aus einem Material, das eine gute thermische Leitfähigkeit aufweist, zu versehen, um Wärme zum Walzenspalt zuzuführen oder von ihm abzuführen. Insbesondere kann diese Schicht aus einem Metall mit einer spiegelglatten oder hochglänzenden Oberfläche bestehen.

Des weiteren ist eine Walze bekannt (DE-U-84 06 019), deren hohlzylindrischer Walzenkörper aus einem mit Kohlenstoffasern verstärkten Kunststoff besteht und dessen Mantel aus einem gegen Fliehkraft widerstandsfähigen Metall mit einer Dicke von 10 bis 1.000 *µ*m beschichtet ist.

Der Erfindung liegt die Aufgabe zugrunde, einen Kalander der eingangs beschriebenen Art anzugeben, bei dem in ein und denselben Walzenspalt eine Papierbahn gleichzeitig verdichtet und auf beiden Seiten geglättet wird.

Diese Aufgabe wird erfindungsgemäß dadurch gelöst, daß die erste Walze eine harte Walze aus Metall ist und eine glatte Oberfläche besitzt und daß die äußere Schicht der weichen zweiten Walze eine ähnlich glatte Oberfläche und solche Verschleißeigenschaften besitzt, daß unter Betriebsbedingungen die mittlere Rauhigkeit Rₐ den Wert 0,5 µ nicht übersteigt.

Bei dieser Ausgestaltung des Bezuges kann für die innere Schicht ein Kunststoff verwendet werden, wie er bisher für solche elastischen Bezüge üblich war. Für die äußere Schicht dagegen wird ein Kunststoff verwendet, dem durch Bearbeitung eine ähnlich glatte Oberfläche wie der harten Walze verliehen werden kann und der diese glatte Oberfläche auch unter den im Betrieb üblichen Verschleißbedingungen beibehält. Der Kalander kann daher als In-Line-Kalander eingesetzt werden. Allerdings setzen diese Eigenschaften voraus, daß der zweite Kunststoff eine größere Härte und eine geringere Elastizität als der erste Kunststoff der inneren Schicht besitzt. Dies ist aber zulässig, weil die äußere Schicht auf der inneren Schicht abgestützt wird und sich bei der Walkarbeit zwar verformt, aber nicht bricht. Da die Oberflächen beider Walzen glatt sind, die eine Oberfläche aber nachzugeben vermag, erhält man in einem einzigen Walzenspalt zusammen mit der Verdichtung der Papierbahn beidseitig eine Verbesserung von Glanz und Glätte.

Als zweiter Kunststoff wird insbesondere ein Silicon-Kautschuk empfohlen. Dieses Material hat überraschenderweise Verschleißeigenschaften, die ständig eine glatte Oberfläche gewährleisten. Außerdem läßt sich dieser Kunststoff bekanntlich in verschiedenen Härtegraden herstellen. Daher können die Forderungen nach hoher Glätte auch unter Betriebsbedingungen erfüllt werden.

Der erste Kunststoff ist zweckmäßigerweise ein Epoxydharz, wie er als elastischer Bezug bei weichen Walzen von Softkalandern bekannt ist. Es kommen aber auch Polyesterharze, Phenolformaldehydharze u.a. in Betracht.

Mit Vorteil ist dafür gesorgt, daß die mittlere Rauhigkeit maximal etwa bei 0,1 *µ*m liegt. Der Kunststoff der äußeren Schicht läßt sich daher tatsächlich mit einer Oberfläche versehen, die so glatt ist und bleibt wie die Oberfläche der harten Walze.

Vorzugsweise hat die äußere Schicht eine Dicke von 1 bis 10 mm, vorzugsweise 3 mm. Diese Schichtdicke ist größer als bei den bekannten Metallschichten, was einerseits das Aufbringen beispielsweise durch Gießen, Spritzen oder Rollen, insbesondere auch ohne Wärmezufuhr, erleichtert und andererseits die Stabilität der äußeren Schicht gegen Brechen erhöht.

Mit Vorteil hat die innere Schicht einen Elastizitätsmodul von 3.000 bis 30.000, vorzugsweise von 6.000 bis 7.000. In diesem Bereich ergeben sich die besten Ergebnisse bezüglich der Verdichtung.

Des weiteren ist es empfehlenswert, daß die äußere Schicht eine Shore-D-Härte von 65 bis 95, vorzugsweise von 85 bis 92, hat. Dieser Härtebereich gibt hinsichtlich Verdichtung und Glätte die besten Ergebnisse.

Günstig ist es auch, daß die weiche Walze eine Durchbiegungseinstellwalze und die harte Walze beheizbar ist. Dies ergibt die billigste Lösung eines modernen Softkalanders, weil die Funktionen der Beheizbarkeit und der Durchbiegungseinstellbarkeit voneinander getrennt sind und weil sich die letztgenannte Funktion durchaus mit dem Betrieb einer weichen Walze verträgt.

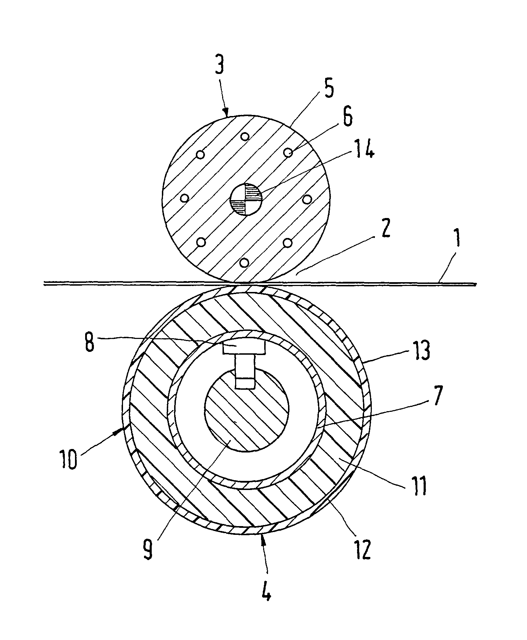

Die Erfindung wird nachstehend anhand eines in der Zeichnung dargestellten Ausführungsbeispiels näher erläutert. Die einzige Figur zeigt einen Schnitt durch einen erfindungsgemäßen Zwei-Walzen-Kalander.

Eine Papierbahn 1 durchläuft einen Walzenspalt 2, der zwischen einer harten Walze 3 und einer elastischen Walze 4 gebildet wird. Die harte Walze 3 besteht aus Metall, insbesondere Stahl, und besitzt eine glatte Oberfläche 5 mit einer Rauhigkeit Rₐ von etwa 0,1 *µ*m. Längsbohrungen 6 deuten an, daß die harte Walze beheizt ist.

Die weiche Walze 4 besteht aus einem stabilen Innenmantel 7 aus Metall, der in an sich bekannter Weise mit Hilfe von Stützelementen 8, die axial nebeneinander angeordnet und einzeln ansteuerbar sind, auf einem drehfesten Träger 9 abgestützt sind. Auf dem Mantel 7 befindet sich ein elastischer Bezug 10. Dieser weist eine innere Schicht 11 aus glas- oder kohlefaserverstärktem Epoxydharz und eine wesentlich dünnere äußere Schicht 12 aus zumindest an der Oberfläche faserfreiem Silicon-Kautschuk auf. Die äußere Schicht 12 besitzt eine Oberfläche 13, deren Glätte ebenfalls bei Rₐ von etwa 0,1 *µ*m liegt. Die Verschleißeigenschaften des Silicon-Kautschuks sind so gewählt, daß die genannte Glätte auch bei Betriebsbedingungen nicht verloren geht. Der Begriff "Betriebsbedingungen" bezieht sich auf die betriebliche Belastung während der üblichen Zeit zwischen zwei Walzenwechseln, die normalerweise im Abstand von etwa drei Monaten erfolgen.

Bei einem Ausführungsbeispiel galten die folgenden Daten:

| | |
|---|---|
| Durchmesser der harten Walze 3 | 600 mm |
| Durchmesser der weichen Walze 4 | 800 mm |
| Umfangsgeschwindigkeit der Walzen | 1.400 m/min |
| Temperatur der harten Walze 3 | 110 °C |

| Innere Schicht 9 | |
|---|---|
| Material: faserverstärktes Epoxydharz Dicke | 10 mm |
| Elastizitätsmodul | 6.500 |

| Äußere Schicht 10 | |
|---|---|
| Material: Silicon-Kautschuk Dicke | 3 mm |
| Härte | 90 Shore D |
| Mittlere Rauhigkeit der Oberfläche | 0,1 µm |
| Streckenlast | 250 N/mm |

Die Daten können in Abhängigkeit vom zu veredelnden Papier oder dessen gewünschten Eigenschaften gewählt werden.

Die harte Walze 3 ist angetrieben, wie das Symbol 14 zeigt. Auch die weiche Walze 4 besitzt einen eigenen Antrieb.

## Patentansprüche

1. Kalander für Papierbahnen, mit mindestens zwei, einen Walzenspalt (2) zwischen sich bildenden Walzen, nämlich einer ersten Walze (3) und einer weichen zweiten Walze (4), die einen Bezug (10) aus elastischem Kunststoff trägt, der eine innere Schicht (11) aus einem ersten Kunststoff und eine äußere Schicht (12) aus einem zweiten Kunststoff aufweist, wobei die äußere Schicht (12) eine geringere Elastizität und eine größere Härte als der erste Kunststoff besitzt, **dadurch gekennzeichnet, daß** die erste Walze (3) eine harte Walze aus Metall ist und eine glatte Oberfläche (55) besitzt und daß die äußere Schicht (12) der weichen zweiten Walze (4) eine ähnlich glatte Oberfläche und solche Verschleißeigenschaften besitzt, daß unter Betriebsbedingungen die mittlere Rauhigkeit Rₐ den Wert 0,5 µm nicht übersteigt.

2. Kalander nach Anspruch 1, **dadurch gekennzeichnet, daß** der zweite Kunststoff ein Silicon-Kautschuk ist.

3. Kalander nach Anspruch 1 oder 2, **dadurch gekennzeichnet, daß** der erste Kunststoff ein Epoxydharz ist.

4. Kalander nach einem der Ansprüche 1 bis 3, **dadurch gekennzeichnet, daß** die mittlere Rauhigkeit Rₐ maximal etwa bei 0,1 *µ*m liegt.

5. Kalander nach einem der Ansprüche 1 bis 4, **dadurch gekennzeichnet, daß** die äußere Schicht (12) eine Dicke von 1 bis 10 mm, vorzugsweise 3 mm, hat.

6. Kalander nach einem der Ansprüche 1 bis 5, **dadurch gekennzeichnet, daß** die innere Schicht (11) einen Elastizitätsmodul von 3.000 bis 30.000, vorzugsweise von 6.000 bis 7.000, hat.

7. Kalander nach einem der Ansprüche 1 bis 6, **dadurch gekennzeichnet, daß** die äußere Schicht (12) eine Shore-D-Härte von 65 bis 95, vorzugsweise von 85 bis 92, hat.

8. Kalander nach einem der Ansprüche 1 bis 7, **dadurch gekennzeichnet, daß** die weiche Walze (4) eine Durchbiegungseinstellwalze und die harte Walze (3) beheizbar ist.

## Claims

1. Calender for lengths of paper with at least two rollers forming a roller aperture (2) between them, namely a first roller (3) and a soft second roller (4), which has a cover (10) made of an elastic plastics material, having an inner layer (11) made of a first plastics material and an outer layer (12) made of a second plastics material, wherein the outer layer (12) has less elasticity and a greater hardness than the first plastics material, **characterised in that** the first roller (3) is a hard roller made of metal and has a smooth surface (55) and the outer layer (12) of the soft second roller (4) has a similarly smooth surface and wearing properties of such a kind that under operational conditions the average roughness Rₐ does not exceed the value 0.5 ìm.

2. Calender according to Claim 1, **characterised in that** the second plastics material is a silicon rubber.

3. Calender according to Claim 1 or 2, **characterised in that** the first plastics material is an epoxy resin.

4. Calender according to one of Claims 1 to 3, **characterised in that** the average roughness Rₐ is about 0.1 ìm.

5. Calender according to one of Claims 1 to 4, **characterised in that** the outer layer (12) has a thickness of 1 to 10 mm, preferably 3 mm.

6. Calender according to one of Claims 1 to 5, **characterised in that** the inner layer (11) has an elasticity module of 3,000 to 30,000, preferably of 6,000 to 7,000.

7. Calender according to one of Claims 1 to 6, **characterised in that** the outer layer (12) has a Shore D hardness of 65 to 95, preferably of 85 to 92.

8. Calender according to one of Claims 1 to 7, **characterised in that** the soft roller (4) is a deflection adjusting roller and the hard roller (3) is heatable.

## Revendications

1. Calandre pour des nappes de papier, comprenant au moins deux cylindres formant entre eux une fente de calandrage (2), à savoir un premier cylindre (3) et un deuxième cylindre (4), lequel porte un revêtement (10) en matière plastique élastique qui comporte une couche intérieure (11) en une première matière plastique et une couche extérieure (12) en une deuxième matière plastique, ladite couche extérieure (12) présentant une élasticité plus faible et une dureté plus forte que la première matière plastique, **caractérisée en ce que** le premier cylindre (3) est un cylindre dur en métal et possède une surface lisse (55), et **en ce que** la couche extérieure (12) du deuxième cylindre souple (4) possède une surface lisse analogue et des propriétés d'usure telles que la rugosité moyenne Ra sous les conditions de fonctionnement ne dépasse pas la valeur de 0,5 microns.

2. Calandre selon la revendication 1,
**caractérisée en ce que** la deuxième matière plastique est un caoutchouc au silicone.

3. Calandre selon l'une ou l'autre des revendications 1 et 2, **caractérisée en ce que** la première matière plastique est une résine époxyde.

4. Calandre selon l'une des revendications 1 à 3, **caractérisée en ce que** la rugosité moyenne Ra est au maximum environ égale à 0,1 microns.

5. Calandre selon l'une des revendications 1 à 4, **caractérisée en ce que** la couche extérieure (12) a une épaisseur de 1 à 10 mm, de préférence 3 mm.

6. Calandre selon l'une des revendications 1 à 5, **caractérisée en ce que** la couche intérieure (11) a un module d'élasticité compris entre 3000 et 30.000, de préférence entre 6000 et 7000.

7. Calandre selon l'une des revendications 1 à 6, **caractérisée en ce que** la couche extérieure (12) a une dureté Shore-D comprise entre 65 et 95, de préférence entre 85 et 92.

8. Calandre selon l'une des revendications 1 à 7, **caractérisée en ce que** le cylindre souple (4) est un cylindre de réglage de flexion, et **en ce que** le cylindre dur (3) est susceptible d'être chauffé.
